# EUROPEAN PATENT SPECIFICATION

(11) **EP 1 788 351 B1**
(45) Date of publication and mention of the grant of the patent: **03.05.2017**
(21) Application number: 05782322.1
(22) Date of filing: 08.09.2005
(51) Int. Cl.: G01C 19/56, G01C 19/5776

(54) **OSCILLATION TYPE INERTIAL FORCE SENSOR**
OSZILLATIONSTRÄGHEITSKRAFTSENSOR
DÉTECTEUR DE FORCE D INERTIE DE TYPE OSCILLATION

(30) Priority: 09.09.2004 JP 2004262930
(43) Date of publication of application: 23.05.2007
(73) Proprietor: MURATA MANUFACTURING CO., LTD., Nagaokakyo-shi, Kyoto 617-8555 (JP); Asahi Kasei EMD Corporation, Tokyo 160-0023 (JP)
(72) Inventor: MORI, Akira, Nagaokakyo-shi, Kyoto 6178555 (JP); NAGAI, Iku, Kawasaki-shi, Kanagawa 2110051 (JP); SAWADA, Kazushige, Atsugi-shi, Kanagawa 2430032 (JP); NARITA, Makoto, Yokohama-shi, Kanagawa 2460022 (JP)
(74) Representative: Delumeau, François Guy
(86) International application number: PCT/JP2005/016549
(87) International publication number: WO 2006/028186

(56) References cited:
- EP-A2- 0 947 803
- JP-A- 9 033 262
- JP-A- 9 292 231
- JP-A- 9 297 028
- US-A1- 2001 022 106

## Description

### Technical Field

The present invention relates to an inertial force sensor for detecting an inertial force and, more particularly, to an oscillation type inertial force sensor for detecting an inertial force by using an oscillator.

### Background Art

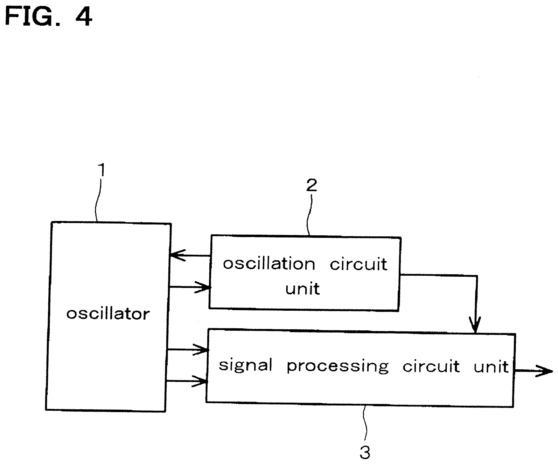

A conventional oscillation type inertial force sensor of this kind has, for example, a configuration as shown in FIG. 4 (refer to, for example, Japanese Patent Laid-Open Nos. H10-221083 and H9-292231).

The oscillation type inertial force sensor is used as an angular rate sensor for detecting an angular rate as an inertial force and has an oscillator 1 for detecting an angular rate, an oscillation circuit unit 2 for driving the oscillator 1, and a signal processing circuit unit 3 for generating an angular rate signal having a direct current voltage according to the angular rate on the basis of a detection output of the oscillator 1. Although an electrostatic capacitance detection type is used here as the oscillator 1, there is also a case that a piezoelectric drive/piezoelectric detection type oscillator (fork oscillator, tuning bar vibrator, or the like) is used. The oscillation circuit unit 2 is constructed as a self-excited oscillator of a closed loop using the oscillator 1 as a resonance element.

In the oscillation type inertial force sensor having the above-described configuration, an oscillation output of the oscillation circuit unit 2 is given as a drive signal for the oscillator 1. In response to the drive signal, the oscillator 1 oscillates in a predetermined drive direction and a signal according to an oscillation amount in the drive direction is fed back to the oscillation circuit unit 2. Consequently, the oscillation circuit unit 2 oscillates by itself, and the drive signal is supplied again to the oscillator 1. As a result, the oscillation of the oscillator 1 is maintained at an almost self-resonant frequency.

When a rotation angular rate using an angular rate detection axis of the oscillator 1 as a rotation axis is applied, a Coriolis force is generated in a direction orthogonal to the drive direction, and the drive direction of the oscillator 1 changes. A vibration displacement due to the Coriolis force is detected by the oscillator 1 and input to the signal processing circuit unit 3. The signal processing circuit unit 3 performs predetermined signal processes such as signal conversion, synchronous detection, smoothing, and the like on the basis of a detection output of the oscillator 1 and extracts an angular rate signal having a direct current voltage according to the angular rate.

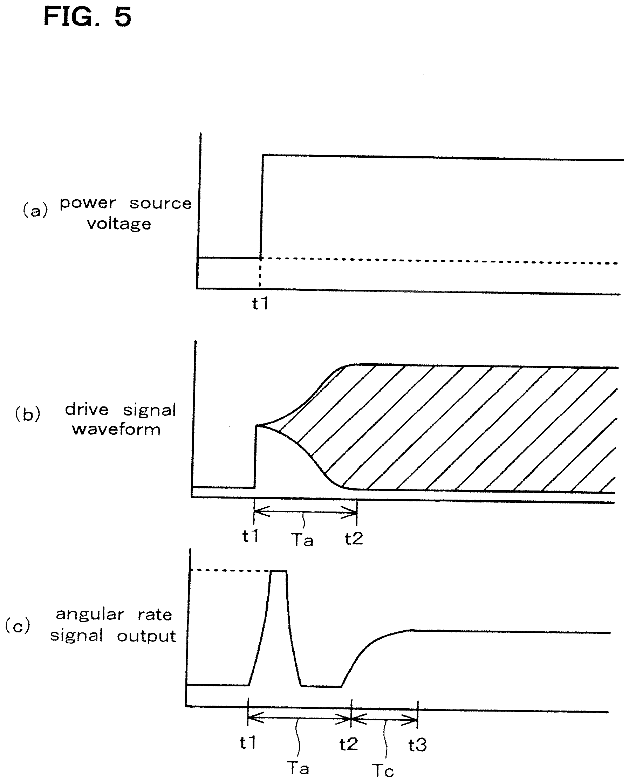

In the conventional oscillation type inertial force sensor shown in FIG. 4, a time of hundreds of microseconds (period Ta in FIG. 5(b)) is necessary after power-on (time t1 in FIG. 5(a)) until the oscillation output of the oscillation circuit unit 2 becomes stable (time t2 in FIG. 5(b)). In the period Ta, the voltage of the drive signal applied to the oscillator 1 is in an unstable state.

In the state where the voltage is unstable, that is, in the unstable period Ta, the drive state of the oscillator 1 is also unstable, so that the detection output of the oscillator 1 includes a large error signal. Therefore, the angular rate signal from the signal processing circuit unit 3 is largely disturbed and the output fluctuates (refer to FIG. 5(c)).

The signal processing circuit unit 3 includes a smoothing circuit for smoothing an output subjected to synchronous detection synchronously with the oscillation frequency of the oscillation circuit unit 2. A certain time is required until an output of the smoothing circuit is stabilized. For example, the smoothing circuit is normally set in a cutoff frequency of about 10 to 50 Hz, and has a time constant of about 16 to 3 ms.

In the case of the conventional oscillation type inertial force sensor, a signal which is input to the smoothing circuit is largely disturbed during the period Ta in which an oscillation output is unstable. Consequently, also after lapse of the unstable period Ta of the oscillation circuit unit 2, a certain time (period Tc in FIG. 5(c)) is necessary until an output of the smoothing circuit becomes actually stable.

As described above, the conventional oscillation type inertial force sensor has a problem such that a predetermined period (Ta+Tc) is necessary after power-on until an output of the signal processing circuit unit 3 becomes stable. Moreover, in this case, the time (time t3 in FIG. 5) when the output of the signal processing circuit unit 3 becomes stable is unclear for the user. It is difficult to determine when measurement of an angular rate, that is, use of an output signal is actually started. Consequently, when measurement of an angular rate starts abruptly during the period from power-on until an output of the signal processing circuit unit 3 is stabilized, a large error may be involved. There is a problem such that the angular rate cannot be detected with high precision.

It is also possible to show the time since power-on until an output of the signal processing circuit unit 3 becomes stable and alert the user not to measure the angular rate until the time elapses by a product specification or the like. However, it is not preferable since an extra load is applied to the user side.

JP 9 297028 describes subject matter corresponding to the pre-characterizing portion of claim 1.

### Disclosure of the Invention

### Problems to be Solved by the Invention

The present invention has been achieved to solve the problems and an object of the invention is to provide an oscillation type inertial force sensor capable of promptly starting measurement by shortening a period since power-on until a signal output becomes stable, which can also clearly recognize from outside that the signal output has become stable and, even when measurement starts abruptly in an unstable state, minimizing occurrence of a measurement error.

### Means for Solving the Problems

To solve the problems, the present invention provides an oscillation type inertial force sensor including an oscillator for detecting an inertial force, an oscillation circuit unit for driving the oscillator, and a signal processing circuit unit for generating a signal according to the magnitude of the inertial force on the basis of a detection output of the oscillator, and employs the following configuration.

Specifically, an oscillation type inertial force sensor according to claim 1 of the present invention includes an oscillator for detecting an inertial force, an oscillation circuit unit for driving the oscillator, and a signal processing circuit unit for generating a signal according to the magnitude of the inertial force on the basis of a detection output of the oscillator. The sensor includes a holding means adapted to hold a processed signal in the signal processing circuit unit at a predetermined potential during a period immediately after power-on until operation of the oscillation circuit unit becomes stable in response to power-on. The sensor is characterized in that, the holding means has an amplitude determining circuit for monitoring signal amplitude of the oscillation circuit unit and performing a control so that the processed signal is held at a predetermined potential until the signal amplitude becomes equal to or larger than a predetermined value.

An oscillation type inertial force sensor of claim 2 is characterized in that, in the configuration of the invention of claim 1, the signal processing circuit unit comprises at least a synchronous detection circuit for synchronous-detecting a detection output of the oscillator, and a smoothing circuit for smoothing an output of the synchronous detection circuit, and the holding means holds a processed signal at a predetermined potential in a stage before the smoothing circuit in the signal processing circuit unit.

An oscillation type inertial force sensor of claim 3 is characterized in that, in the configuration of the invention of claim 1 or 2, the predetermined potential held by the holding means is set in correspondence with a potential obtained as an output of the signal processing circuit unit when no inertial force is
detected.

An oscillation type inertial force sensor of claim 4 is characterized in that, in the configuration of the invention of any one of claims 1 to 3, the holding means has a status notification output terminal for notifying the outside of the fact that an oscillation state of the oscillation circuit unit is stabilized.

### Effects of the Invention

The oscillation type inertial force sensor of claim 1 of the present invention includes a holding means for holding a processed signal in the signal processing circuit unit at a predetermined potential during a period immediately after power-on until operation of the oscillation circuit unit becomes stable. Consequently, a processed signal in the signal processing circuit unit is held at a predetermined potential during a period in which the oscillation state of the oscillator is unstable, and an output of the signal processing circuit unit is also held at a constant potential. Therefore, even in the case where a signal is measured abruptly in the unstable period, occurrence of an error can be suppressed to the minimum. Thus, occurrence of troubles such that a large error occurs and measurement precision extremely deteriorates and that an output of the signal processing circuit unit is saturated and measurement cannot be performed can be prevented with reliability.

In the case where the signal processing circuit unit comprises at least a synchronous detection circuit for synchronous-detecting a detection output of the oscillator, and a smoothing circuit for smoothing an output of the synchronous detection circuit like the oscillation type inertial force sensor of claim 2, when the holding means holds a processed signal at a predetermined potential in a stage before the smoothing circuit in the signal processing circuit unit, since a signal held at the predetermined potential is input to the smoothing circuit also in the period in which the oscillation state of the oscillator is unstable, the oscillation state of the oscillator shifts to a stable state, and the unstable period of the smoothing circuit when holding of the predetermined potential is stopped is shortened. Therefore, the whole time since power-on until an output of the signal processing circuit unit becomes stable is shortened, and measurement can be started promptly.

In the case where the oscillation type inertial force sensor does not have the holding means, if an error of the sensor output becomes large even temporarily, even when the sensor output is switched to a sensor output with little error after that, some time is required until a signal recovers to a correct value. When it is assumed that the correct sensor output is 0 mV but is 1000 mV just before the switch, certain time according to the time constant of the smoothing circuit is required for the sensor output to recover from 1000 mV to a value around 0 mV (5 mV or less).

On the other hand, when an error of the sensor output is not so large, in the case where the output is switched to an output with a small error, long time is not required for the signal to recover to the correct value. When it is assumed that the correct sensor output is 0 mV but is 10 mV just before the switch, to recover from 10 mV to a value around 0 mV, for example, 5 mV or less, shorter time is necessary as compared with the case where the sensor output recovers from 1000 mV to a value around 0 mV, for example, 5 mV or less.

As described above, when there is no holding means, time required to regain a correct output fluctuates in accordance with the magnitude of an error just before a correct output is given. When an error just before the switch is large, long time is required to regain a correct output.

In contrast, when the holding means is provided like in the present invention, irrespective of an output from the oscillator, an input of the smoothing circuit becomes a value close to a correct output. That is, in the above-described example, the value just before the switch to an output with a small error (correct value) can be always made 10 mV. As compared with the case where no holding means is provided and a sensor output temporarily becomes an output with a large error, for example, 1000 mV, the time until an output becomes stable can be shortened certainly, and measurement can be started promptly.

In the oscillation type inertial force sensor of claim 1, since the holding means has an amplitude determining circuit for monitoring signal amplitude of the oscillation circuit unit and performing a control so that the processed signal is held at a predetermined potential until the signal amplitude becomes equal to or larger than a predetermined value, the signal amplitude of the oscillation circuit unit is monitored by the amplitude determining circuit. Consequently, the period since power-on until the oscillation state of the oscillator becomes stable can be detected with reliability. Therefore, even in the case where the period since power-on until the oscillation state of the oscillator becomes stable varies among products or lots, or according to use conditions or the like, without being influenced by the factors, the processed signal in the signal processing circuit unit can be reliably held at the predetermined potential during the period since power-on until the oscillation state of the oscillator becomes stable. Thus, the reliability can be further improved.

In the case where the predetermined potential held by the holding means is set in correspondence with a potential obtained as an output of the signal processing circuit unit when no inertial force is detected like in the oscillation type inertial force sensor of claim 3, even when signal measurement is performed abruptly in the period in which the state of the oscillation circuit unit is unstable, occurrence of an error can be suppressed to the minimum. Specifically, it is considered that a device using the oscillation type inertial force sensor such as a video camera or a car navigation system is usually in an almost stationary state for a while after power-on. Therefore, by preliminarily setting the predetermined potential held by the holding means to a value corresponding to a potential obtained as an output of the signal processing circuit unit when no inertial force is detected, a measurement output according to use conditions of the device is generated from the signal processing circuit unit. Thus, even if an accurate measurement output cannot be obtained during the unstable period, occurrence of a problem can be suppressed.

In the case where the holding means has a status notification output terminal for notifying the outside of the fact that an oscillation state of the oscillation circuit unit is stabilized like in the oscillation type inertial force sensor of claim 4 , the user can clearly grasp the timing at which an output of the signal processing circuit unit is stabilized. Therefore, the user can reliably determine the start timing of measurement, so that occurrence of a trouble such that measurement is started abruptly in a state where an output of the signal processing circuit unit is unstable after power-on can be prevented, and reliability can be improved.

### Brief Description of the Drawings

FIG. 1 is a block diagram showing the configuration of an oscillation type inertial force sensor according to a first embodiment of the present invention.
FIGS. 2(a) to 2(d) are time charts provided for explaining operations of the oscillation type inertial force sensor shown in FIG. 1.
FIG. 3 is a block diagram showing the configuration of a related oscillation type inertial force sensor.
FIG. 4 is a block diagram showing a schematic configuration of a conventional oscillation type inertial force sensor.
FIGS. 5(a) to 5(c) are time charts provided for explaining operations of the conventional oscillation type inertial force sensor shown in FIG. 4.

### Description of Reference Numerals

- 1: oscillator
- 2: oscillation circuit unit
- 3: signal processing circuit unit
- 4: holding means
- 11: first detecting means
- 12: second detecting means
- 13: oscillating body
- 14: driving means
- 15: monitor means
- 21: signal converting circuit
- 22: first phase adjustment circuit
- 23: AGC circuit
- 31: first signal converting circuit
- 32: second signal converting circuit
- 33: differential amplification circuit
- 34: second phase adjustment circuit
- 35: synchronous detection circuit
- 36: smoothing circuit
- 37: amplification circuit
- 41: switching circuit
- 42: reference potential generating circuit
- 43: amplitude determining circuit
- 44: status notification output terminal
- 45: timer circuit
- 46: power source terminal

### Best Mode for Carrying Out the Invention

Embodiments of the present invention and their characteristics will be described below more specifically.

### First Embodiment

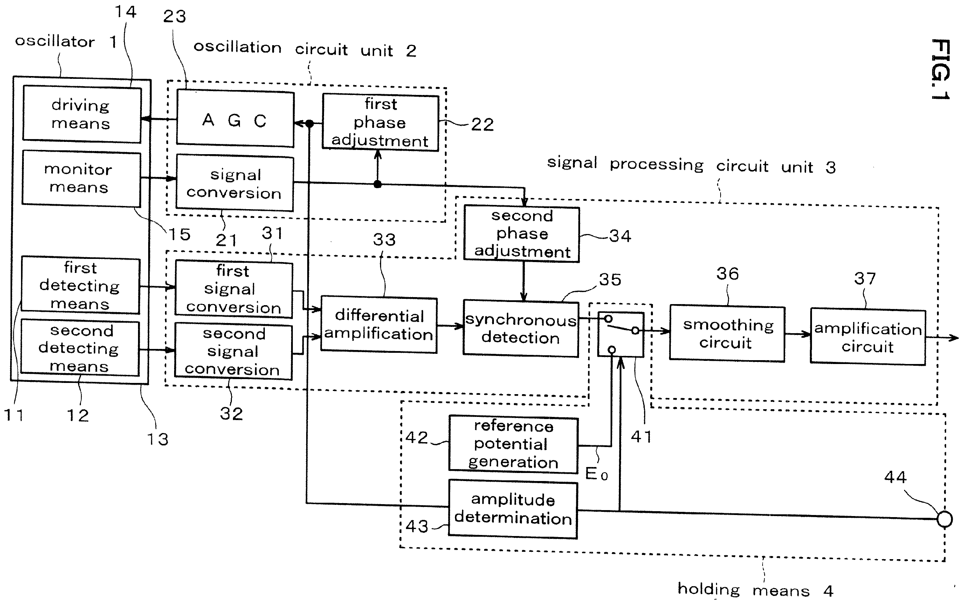

FIG. 1 is a block diagram showing the configuration of an oscillation type inertial force sensor according to a first embodiment of the invention.

The oscillation type inertial force sensor of the first embodiment is applied as an angular rate sensor for detecting an angular rate as an inertial force and has an oscillator 1 for detecting an angular rate, an oscillation circuit unit 2 for driving the oscillator 1, and a signal processing circuit unit 3 for generating an angular rate signal according to the angular rate on the basis of a detection output of the oscillator 1.

In the case of the first embodiment, the oscillator 1 is of an electrostatic capacitance detection type and has an oscillating body 13, a driving means 14 for driving the oscillating body 13, a monitor means 15 for monitoring an oscillation state of the oscillating body 13 and feeding back the monitor result to the oscillation circuit unit 2, and first and second detecting means 11 and 12 for detecting vibration displacement due to the Coriolis force of the oscillating body 13. The oscillating body 13 is constructed by an oscillation substrate made of a silicon material, a glass material, or the like. The driving means 14 is constructed by a drive electrode. The monitor means 15 is constructed by a monitor electrode. Each of the first and second detecting means 11 and 12 is constructed by a detection electrode.

The oscillation circuit unit 2 acts as a self-excited oscillation circuit of a closed loop using the oscillator 1 as a resonance element, and includes a signal converting circuit 21, a first phase adjustment circuit 22, and an AGC circuit 23.

Since a monitor signal output of the monitor means 15 in the oscillator 1 indicates a change in electrostatic capacitance, a C-V converting circuit for converting a capacitance change amount to a voltage corresponding to the capacitance change amount is used as the signal converting circuit 21. The first phase adjustment circuit 22 adjusts the phase of the monitor signal output from the signal converting circuit 21 so that self-oscillation can be performed. The AGC circuit 23 adjusts the amplitude of the output signal from the first phase adjustment circuit 22 to a voltage of a constant level, and outputs the resultant signal as a drive signal to the driving means 14. An output of the signal converting circuit 21 is also supplied to a second phase adjustment circuit 34 in the signal processing circuit unit 3.

The signal processing circuit unit 3 has first and second signal converting circuits 31 and 32, a differential amplification circuit 33, the second phase adjustment circuit 34, a synchronous detection circuit 35, a smoothing circuit 36, and an amplification circuit 37.

The first and second signal converting circuits 31 and 32 convert a detection signal output from the oscillator 1 so as to be adapted to signal processes. In the case where the oscillator 1 is of an electrostatic capacitance detection type, an output of each of the first and second detecting means 11 and 12 is detected as a change amount of the electrostatic capacitance. Consequently, each of the first and second signal converting circuits 31 and 32 is constructed by a C-V converting circuit for converting an electrostatic capacitance change amount to a voltage corresponding to the electrostatic capacitance change amount.

The differential amplification circuit 33 amplifies the difference between output signals from the first and second signal converting circuits 31 and 32. The output signals from the signal converting circuits 31 and 32 have phases opposite to each other and are converted to a single voltage signal corresponding to the Coriolis force by the differential amplification circuit 33.

The second phase adjustment circuit 34 adjusts the phase of the monitor signal output from the signal converting circuit 21 of the oscillation circuit unit 2 to a phase adapted to perform synchronous detection on an output signal from the differential amplification circuit 33. The synchronous detection circuit 35 performs synchronous detection on the output signal from the second phase adjustment circuit 34 as a reference phase, thereby taking an angular rate signal according to the angular rate. Since the angular rate signal subjected to the synchronous detection in the synchronous detection circuit 35 is in a half-wave rectified state, the smoothing circuit 36 smoothes the angular rate signal to a DC voltage according to the angular rate. The amplification circuit 37 direct-current-amplifies the angular rate signal smoothed by the smoothing circuit 36 and outputs the amplified signal.

Further, the oscillation type inertial force sensor of the first embodiment has a holding means 4 for holding a process signal in the signal processing circuit unit 3 to a predetermined potential during a period since immediately after power-on until the oscillation circuit unit 2 becomes a stable state in accordance with power-on.

The holding means 4 has a reference potential generating circuit 42, an amplitude determining circuit 43, a switching circuit 41, and a status notification output terminal 44. The reference potential generating circuit 42 generates a predetermined reference potential Eo. The reference potential Eo in this case is set in correspondence with a potential obtained as an output of the signal processing circuit unit 3 at the time of no rotation in which no rotation angular rate is applied to the oscillator 1.

Concretely, for example, in the case where a DC voltage signal output from the signal processing circuit unit 3 lies in the range of ±2.5V around 2.5V indicative of no rotation as a center, the reference potential Eo of the reference potential generating circuit 42 is set so that +2.5V corresponding to no rotation is output from the signal processing circuit unit 3 in a hold state.

The amplitude determining circuit 43 monitors the amplitude of an output signal of the first phase adjustment circuit 22 in the oscillation circuit unit 2 and determines whether the signal amplitude is equal to or larger than a predetermined value. The switching circuit 41 is provided between the synchronous detection circuit 35 at the ante stage of the smoothing circuit 36 and the smoothing circuit 36. When a status signal indicating that the oscillation circuit unit 2 is stabilized is output from the amplitude determining circuit 43, the switching circuit 41 switches a connection state from a state where the reference potential generating circuit 42 and the smoothing circuit 36 are connected to each other to a state where the synchronous detection circuit 35 and the smoothing circuit 36 are connected to each other. From the status notification output terminal 44, a status signal notifying the outside of the fact that the oscillation state of the oscillation circuit unit 2 is stabilized is output from the amplitude determining circuit 43.

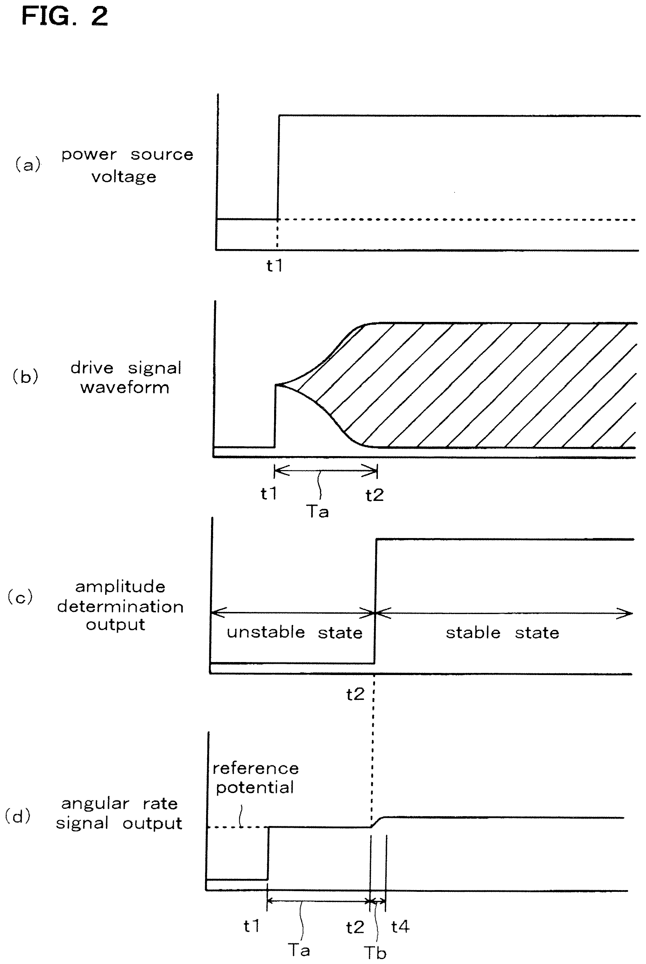

The operation of the oscillation type inertial force sensor having the above-described configuration will now be described with reference to the time chart of FIG. 2.

By power-on, a drive signal is output from the oscillation circuit unit 2 to the driving means 14 in the oscillator 1. Consequently, the oscillator 1 is oscillated in a predetermined drive direction, and an output signal from the first phase adjustment circuit 22 is input to the amplitude determining circuit 43. The amplitude determining circuit 43 determines whether the waveform amplitude of the output signal of the first phase adjustment circuit 22 is equal to or larger than a predetermined value.

Since the operation of the oscillation circuit unit 2 is unstable for a certain period (the period Ta in FIG. 2(b)) after power-on (time t1 in FIG. 2(a)), a voltage of a drive signal applied to the driving means 14 in the oscillator 1 is also in an unstable state. At this time, the waveform amplitude of an output signal of the first phase adjustment circuit 22 is less than the predetermined value, so that no signal is output from the amplitude determining circuit 43 (refer to FIG. 2(c)).

In this case, the reference potential generating circuit 42 is connected to the smoothing circuit 36 by the switching circuit 41, so that the predetermined reference potential Eo generated by the reference potential generating circuit 42 is output via the smoothing circuit 36 and the amplification circuit 37. Consequently, an output of the signal processing circuit unit 3 is held at a constant potential corresponding to the time of no rotation, for example, at 2.5V as described above.

After that, when the operation of the oscillation circuit unit 2 is stabilized after lapse of time, the waveform amplitude of the output signal of the first phase adjustment circuit 22 becomes equal to or larger than the predetermined value (time t2 in FIG. 2). Accordingly, a high-level status signal indicating that the oscillation circuit unit 2 is stabilized is output from the amplitude determining circuit 43 (refer to FIG. 2(c)). By the status signal, the switching circuit 41 is switched, and the synchronous detection circuit 35 is connected to the smoothing circuit 36. Consequently, an angular rate can be measured. Since the status signal output from the amplitude determining circuit 43 is applied to the status notification output terminal 44, it is notified to the outside that the oscillation status of the oscillation circuit unit 2 is stabilized.

In the oscillation type inertial force sensor of the invention, a drive signal is supplied to the driving means 14 in the oscillator 1, so that the oscillating body 13 oscillates in a predetermined drive direction and a monitor signal according to the oscillation in the drive direction is output from the monitor means 15. Since the monitor signal is fed back to the oscillation circuit unit 2, the oscillation circuit unit 2 self-oscillates by the monitor signal, and the drive signal is applied again to the driving means 14. Consequently, the oscillating body 13 of the oscillator 1 continuously stably oscillates at a resonance frequency which is the same frequency as that of the drive signal output from the oscillation circuit unit 2.

When a rotation angular rate is applied to the angular rate detection axis of the oscillator 1 in this state, a Coriolis force is generated in a direction orthogonal to the drive direction, and the oscillation direction of the oscillator 1 changes. A vibration displacement due to the Coriolis force is detected by the first and second detecting means 11 and 12, and is input to the signal processing circuit unit 3.

The first and second signal converting circuits 31 and 32 in the signal processing circuit unit 3 convert an electrostatic capacitance change detected by the first and second detecting means 11 and 12 in the oscillator 1 to a voltage signal corresponding to the magnitude of the change. Subsequently, the both signals are amplified by the differential amplification circuit 33, and the resultant single signal is input to the synchronous detection circuit 35. The synchronous detection circuit 35 detects the differential-amplified signal synchronously with an output signal of the second phase adjustment circuit 34 as a reference phase, so that an angular rate signal based on the Coriolis force is taken from the synchronous detection circuit 35.

In the conventional oscillation type inertial force sensor, the angular rate signal output from the signal processing circuit unit 3 is largely disturbed and output fluctuations occur during the period in which the oscillation state of the oscillator 1 is unstable (refer to FIG. 5(c)). In contrast, in the oscillation type inertial force sensor of the first embodiment, the signal having the predetermined reference potential Eo is supplied from the reference potential generating circuit 42 to the smoothing circuit 36 during the period in which the oscillation state of the oscillator 1 is unstable, so that an output of the signal processing circuit unit 3 is held at a constant potential corresponding to no rotation (refer to FIG. 2(d)). Therefore, problems such as large fluctuations in the output of the signal processing circuit unit 3 do not occur, and an error can be suppressed to the minimum.

When the oscillation state of the oscillation circuit unit 2 is stabilized, the fact is notified to the outside via the status notification output terminal 44. The user can reliably determine the timing of start of measurement, and occurrence of a problem such that measurement of an angular rate abruptly starts in a state where an output of the signal processing circuit unit 3 is unstable can be prevented.

Moreover, the predetermined reference potential Eo is applied to the smoothing circuit 36 also in the period in which the oscillation state of the oscillator 1 is unstable, the unstable period (period Tb in FIG. 2(d)) of the smoothing circuit 36 when the oscillation state of the oscillator 1 enters the stable state becomes shorter. Therefore, the general time (Ta+Tb) since power-on until an output of the signal processing circuit unit 3 is stabilized can be made shorter than that in the conventional technique, and measurement of an angular rate can be started promptly.

After the oscillation output of the oscillation circuit unit 2 is stabilized as described above, the angular rate signal based on the Coriolis force taken from the synchronous detection circuit 35 is in a half-wave rectified state. Consequently, the angular rate signal is input to the smoothing circuit 36 via the switching circuit 41 and smoothed to a DC voltage according to the angular rate. Further, the angular rate signal is amplified by the amplification circuit 37, and the amplified signal is output.

Although the amplitude determining circuit 43 determines the amplitude of the output signal of the first phase adjustment circuit 22 in the first embodiment, the invention is not limited to the configuration. Alternatively, the amplitude of an output of the AGC circuit 23 or the amplitude of an output of the signal converting circuit 21 may be monitored.

### A related oscillation type inertial force sensor

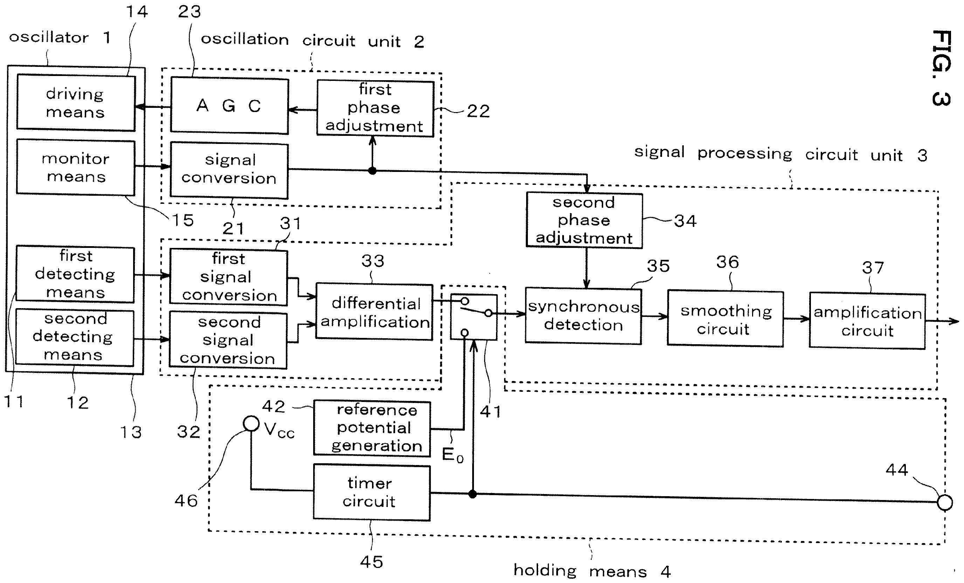

FIG. 3 is a block diagram showing the configuration of a related oscillation type inertial force sensor. In FIG. 3, parts to which the same reference numerals as those of FIG. 1 are designated are parts which are the same as or correspond to those in FIG. 1.

In the related oscillation type inertial force sensor, the amplitude determining circuit 43 used in the first embodiment is not used but a timer circuit 45 is provided, which counts the time since power-on to execute a control so that a processed signal is held at a predetermined potential for a period until predetermined time elapses.

Specifically, in the case where variations are small for a period since power-on until the oscillation state of the oscillation circuit unit 2 is stabilized and the period can be sufficiently predicted, the amplitude determining circuit 43 as in the first embodiment may not be provided. The angular rate can be measured stably also in the case where the processed signal in the signal processing circuit unit 3 is held at a predetermined potential during the period since power-on until predetermined time which is counted elapses.

In the related sensor, the holding means 4 is provided with the reference potential generating circuit 42, the timer circuit 45, the switching circuit 41, and the status notification output terminal 44. In a manner similar to the case where the amplitude determining circuit 43 is provided like in the first embodiment, the angular rate can be measured.

The related oscillation type inertial force sensor is constructed so that, as shown in FIG. 3, the timer circuit 45 is activated when the power source is turned on by the power source terminal 46, and starts counting. After lapse of predetermined time, time is up, and the timer circuit 45 outputs a time-up signal.

The switching circuit 41 is provided between the differential amplification circuit 33 and the synchronous detection circuit 35. When the time-up signal is output from the timer circuit 45, the switching circuit 41 switches the connection state from a state where the reference potential generating circuit 42 and the synchronous detection circuit 35 are connected to a state where the differential amplification circuit 33 and the synchronous detection circuit 35 are connected.

Since the other configuration is similar to that in the case of the first embodiment shown in FIG. 1, to avoid repetition, the detailed description will not be given here.

In the related oscillation type inertial force sensor, the timer circuit 45 is activated by power-on and starts counting. Until the timer circuit 45 times up, the synchronous detection circuit 35 is connected to the reference potential generating circuit 42 by the switching circuit 41, so that a constant reference potential Eo is applied to the synchronous detection circuit 35. In this case, when the input signal level is a constant value, the synchronous detection circuit 35 always outputs a signal of a constant potential. Consequently, the output of the signal processing circuit unit 3 is held at a constant reference potential, for example, the above-described 2.5V

When a predetermined time in which an output of the oscillation circuit unit 2 is expected to be stabilized elapses, the timer circuit 45 times up and outputs a time-up signal. In response to the time-up signal, the switching circuit 41 switches to connect the differential amplification circuit 33 and the synchronous detection circuit 35. Consequently, the angular rate can be output. The time-up signal is supplied to the status notification output terminal 44 so that it is notified to the outside that the oscillation state of the oscillation circuit unit 2 is stabilized.

In the related sensor, when an input signal has a value of a constant level, the synchronous detection circuit 35 always outputs a signal of constant potential. Consequently, the reference potential Eo generated from the reference potential generating circuit 42 does not always have to have a certain magnitude as in the first embodiment but may be the ground potential.

In the first embodiment, the switching circuit 41 is provided between the synchronous detection circuit 35 and the smoothing circuit 36 so that an output of the signal processing circuit unit 3 is held at a predetermined potential. In the related sensor, the switching circuit 41 is provided between the differential amplification circuit 33 and the synchronous detection circuit 35. The position of disposing the switching circuit 41 is not limited to those in the first and embodiment and the related device but may be optional as long as it is within a line through which the angular rate signal is transmitted in the signal processing circuit unit 3.

For example, the switching circuit 41 may be provided between the smoothing circuit 36 and the amplification circuit 37 at a posterior stage to the smoothing circuit 36 or after the amplification circuit 37. It is, however, desirable to provide the switching circuit 41 before the smoothing circuit 36 as in the first and second embodiments to stabilize an output of the signal processing circuit unit 3 early by reducing the influence of the time constant of the smoothing circuit 36 and the like.

When complication of the circuit configuration is allowed, the switching circuit 41 can be provided for each of the first and second signal converting circuits 31 and 32 before the differential amplification circuit 33. It is also possible to provide the switching circuits 41 between the first and second detecting means 11 and 12 and the signal converting circuits 31 and 32, respectively.

Although the electrostatic capacitance detection type is used as the oscillator 1 in the first embodiment and the related sensor, the oscillator 1 is not limited to the electrostatic capacitance detection type in the invention. For example, a tuning bar vibrator having a triangular-prism-shaped vibrating element can also be used.

In the case of using the tuning bar vibrator, for example, the oscillating body 13 is formed in a triangular prism shape made of elinvar, ceramics, or the like. The driving means 14 is constructed by a piezoelectric element, and the monitor means 15 and the first and second detecting means 11 and 12 are shared.

In this case, a charge signal by the piezoelectric effect is output from the first and second detecting means 11 and 12. Consequently, I-V converting circuits for converting current to voltage are applied as the first and second signal converting circuits 31 and 32.

Further, as the oscillator 1, not only an oscillator of an electrostatic capacitance detection type and a tuning bar vibrator but also a fork oscillator and the like can be used.

Although the oscillation circuit unit 2 is constructed as a self-excited oscillation circuit using the oscillator 1 as a resonance element in the first embodiment and the related sensor, in the invention the oscillator circuit unit 2 is not limited to the configuration. For example, it is also possible to provide an oscillator on the outside and apply a forced oscillator for applying an oscillation output to the oscillator 1.

Although the angular rate sensor for detecting angular rate as the oscillation type inertial force sensor has been described as an example in the foregoing first embodiment and the related sensor, the invention is not limited to the angular rate sensor. The invention can be also applied to an acceleration sensor for detecting acceleration by using an oscillator.

### Industrial Applicability

As described above, according to the present invention, the oscillation type inertial force sensor is provided, capable of promptly starting measurement by shortening a period since power-on until a signal output becomes stable and, even when measurement starts in an unstable state, minimizing occurrence of a measurement error.

Therefore, the present invention can be widely applied to the field of an oscillation type inertial force sensor for use in a camera with an image stabilizer, a car navigation system, and the like.

## Claims

1. An oscillation type inertial force sensor including an oscillator (1) for detecting an inertial force, an oscillation circuit unit (2) for driving the oscillator (1), and a signal processing circuit unit (3) for generating a signal according to the magnitude of the inertial force on the basis of a detection output of the oscillator (1), comprising:
a holding means (4) adapted to hold a processed signal in the signal processing circuit unit (3) at a predetermined potential during a period immediately after power-on until operation of the oscillation circuit unit (2) becomes stable in response to power-on;
**characterized in that** the holding means (4) comprises an amplitude determining circuit (43) adapted to monitor signal amplitude of the oscillation circuit unit (2) and to perform a control so that the processed signal is held at a predetermined potential until the signal amplitude becomes equal to or larger than a predetermined value.

2. The oscillation type inertial force sensor according to claim 1, wherein the signal processing circuit unit (3) comprises at least a synchronous detection circuit (35) for synchronous-detecting a detection output of the oscillator (1), and a smoothing circuit (36) for smoothing an output of the synchronous detection circuit (35), andthe holding means (4) is adapted to hold a processed signal at the predetermined potential in a stage before the smoothing circuit (36) in the signal processing circuit unit (3).

3. The oscillation type inertial force sensor according to claim 1 or 2, wherein the predetermined potential held by the holding means (4) is set in correspondence with a potential obtained as an output of the signal processing circuit unit (3) when no inertial force is detected.

4. The oscillation type inertial force sensor according to any one of claims 1 to 3, wherein the holding means (4) has a status notification output terminal (44) for notifying the outside of the fact that an oscillation state of the oscillation circuit unit (2) is stabilized.

## Patentansprüche

1. Oszillationsträgheitskraftsensor, umfassend einen Oszillator (1) zum Erfassen einer Trägheitskraft, eine Oszillationsschaltkreiseinheit (2) zum Antreiben des Oszillators (1) und eine Signalverarbeitungsschaltkreiseinheit (3) zum Erzeugen eines der Größe der Trägheitskraft entsprechenden Signals auf Basis einer Erfassungsausgabe des Oszillators (1), umfassend:
ein Haltemittel (4), das dazu ausgelegt ist, ein verarbeitetes Signal während eines Zeitraums direkt nach dem Einschalten bis zum Stabilwerden des Betriebs der Oszillationsschaltkreiseinheit (2) als Reaktion auf das Einschalten bei einem vorgegebenen Potenzial in der Signalverarbeitungsschaltkreiseinheit (3) zu halten,
**dadurch gekennzeichnet, dass** das Haltemittel (4) einen Amplitudenfeststellungsschaltkreis (43) umfasst, der dazu ausgelegt ist, eine Signalamplitude der Oszillationsschaltkreiseinheit (2) zu überwachen und eine Steuerung durchzuführen, so dass das verarbeitete Signal bei einem vorgegebenen Potenzial gehalten wird, bis die Signalamplitude einen vorgegebenen Wert erreicht oder übersteigt.

2. Oszillationsträgheitskraftsensor nach Anspruch 1, wobei die Signalverarbeitungsschaltkreiseinheit (3) wenigstens einen synchronen Erfassungsschaltkreis (35) zum synchronen Erfassen einer Erfassungsausgabe des Oszillators (1) und einen Verstetigungsschaltkreis (36) zum Verstetigen einer Ausgabe des synchronen Erfassungsschaltkreises (35) umfasst, und
das Haltemittel (4) dazu ausgelegt ist, ein verarbeitetes Signal in einem Stadium vor dem Verstetigungsschaltkreis (36) bei dem vorgegebenen Potenzial in der Signalverarbeitungsschaltkreiseinheit (3) zu halten.

3. Oszillationsträgheitskraftsensor nach Anspruch 1 oder 2, wobei das von dem Haltemittel (4) gehaltene vorgegebene Potenzial in Übereinstimmung mit einem als Ausgabe der Signalverarbeitungsschaltkreiseinheit (3) erhaltenen Potenzial festgelegt wird, wenn keine Trägheitskraft erfasst wird.

4. Oszillationsträgheitskraftsensor nach einem der Ansprüche 1 bis 3, wobei das Haltemittel (4) einen Statusmeldungsausgabeanschluss (44) zum Melden der Tatsache nach außen, dass ein Oszillationszustand der Oszillationsschaltkreiseinheit (2) stabilisiert ist, aufweist.

## Revendications

1. Capteur de force d'inertie du type à oscillation comprenant un oscillateur (1) destiné à détecter une force d'inertie, une unité de circuit d'oscillation (2) destinée à piloter l'oscillateur (1), et une unité de circuit de traitement de signal (3) destinée à générer un signal en fonction de la magnitude de la force d'inertie sur la base d'une sortie de détection de l'oscillateur (1), comprenant :
un moyen de maintien (4) conçu pour maintenir un signal traité dans l'unité de circuit de traitement de signal (3) à un potentiel prédéterminé pendant une période succédant immédiatement à la mise en marche jusqu'à ce que le fonctionnement de l'unité de circuit d'oscillation (2) devienne stable en réponse à la mise en marche ;
**caractérisé en ce que** le moyen de maintien (4) comprend un circuit de détermination d'amplitude (43) conçu pour contrôler l'amplitude de signal de l'unité de circuit d'oscillation (2) et à effectuer un réglage, de sorte que le signal traité est maintenu à un potentiel prédéterminé jusqu'à ce que l'amplitude du signal devienne supérieure ou égale à une valeur prédéterminée.

2. Capteur de force d'inertie du type à oscillation selon la revendication 1, dans lequel l'unité de circuit de traitement de signal (3) comprend au moins un circuit de détection synchrone (35) permettant la détection synchrone d'une sortie de détection de l'oscillateur (1), et un circuit de lissage (36) destiné à lisser une sortie du circuit de détection synchrone (35), et
le moyen de maintien (4) est conçu pour maintenir un signal traité au potentiel prédéterminé dans un étage précédant le circuit de lissage (36) dans l'unité de circuit de traitement de signal (3).

3. Capteur de force d'inertie du type à oscillation selon la revendication 1 ou 2, dans lequel le potentiel prédéterminé maintenu par le moyen de maintien (4) est défini en correspondance avec un potentiel obtenu en tant que sortie de l'unité de circuit de traitement de signal (3) lorsqu'aucune force d'inertie n'est détectée.

4. Capteur de force d'inertie du type à oscillation selon l'une quelconque des revendications 1 à 3, dans lequel le moyen de maintien (4) présente un terminal de sortie de notification de statut (44) destiné à notifier à l'extérieur le fait qu'un état d'oscillation de l'unité de circuit d'oscillation (2) est stabilisé.
